# EUROPEAN PATENT APPLICATION

(11) **EP 4 711 996 A1**
(43) Date of publication of application: **18.03.2026**
(21) Application number: 23936653.7
(22) Date of filing: 11.05.2023
(51) Int. Cl.: G06Q 10/10

(54) **MANAGEMENT SERVER, TERMINAL, METHOD, PROGRAM, AND INFORMATION RECORDING MEDIUM FOR MANAGING ATTENDEE AND ATTENDANCE VERFIFIER IN MEETING BY USING MACHINE-RECOGNIZABLE CODE**

(71) Applicant: PASSLOGY CO., LTD., Tokyo 101-0051 (JP)
(72) Inventor: OGAWA, Hideharu, Tokyo 101-0051 (JP)
(74) Representative: Epping - Hermann - Fischer
(86) International application number: PCT/JP2023/017818
(87) International publication number: WO 2024/232105

(57) **Abstract**

To manage a verifier and an attendee in a meeting assigned with a code and facilitate attendance verification, a management server (111) receives a request from a terminal (121) having machine-recognized the code, sets the meeting to valid when the terminal (121) is a verifier terminal and to invalid when a predetermined period has elapsed, registers, as a meeting attendee, a user of the terminal (121) when the terminal (121) is not the verifier terminal and the meeting is set to valid, and reports the registered attendee to the verifier or a manager of the meeting. The management server (111) may record, as a host region, a region within a predetermined range including a location of the terminal (121) when the terminal (121) is the verifier terminal, and may not record, as a meeting attendee, the user of the terminal (121) when the terminal (121) is not the verifier terminal, the meeting is set to valid, and the terminal (121) is located outside a range of the host region of the meeting.

## Description

### Technical Field

The present disclosure relates to a management server, a terminal, a method, a program, and an information recording medium for managing an attendance verifier and an attendee in a meeting by using a machine-recognizable code.

### Background Art

Conventionally, a technique using a machine-recognizable code such as a QR code (registered trademark) has been proposed for managing an attendee in various types of meetings by a verifier who verifies attendance in the meetings, such as attendance in a class, participation in various events, and attendance at work.

For example, Patent Literature 1 proposes an attendance status verification system that includes, in order to reduce operation load and time for a verifying person and a person to be verified: an attendance status verifying-side computer including an encryption key creation function, a function of creating and outputting a QR code (registered trademark) to an information transmission medium, a function of receiving an email from a participant and reading text data and a hash value written therein, an encryption key creation function of creating a verification hash value, a function of comparing the hash value written in the received email with the verification hash value to verify correctness, and a function of automatically creating and transmitting an email notifying acceptance or rejection of an application based on the comparison result; and a cellular phone of the participant or the like including a digital camera, a function of reading a photographed QR code (registered trademark), and an email transmission and reception function.

Meanwhile, Patent Literature 2 also proposes a technique for, in a stamp rally in which train stations are visited, reading a QR code (registered trademark) or the like with a terminal of a participant instead of stamping at each station and thereby verifying that the participant has participated in the stamp rally at the station. Note that, in the stamp rally, when a participant arrives at a stamp collection point at each station, it can be interpreted that the participant has participated in a meeting held at the station.

Other than the above, Patent Literature 3 discloses a technique for assigning a key pair of public and private keys to a terminal and thereby determining the terminal.

### Citation List

### Patent Literature

Patent Literature 1: Unexamined Japanese Patent Application Publication No. 2010-170494
Patent Literature 2: Unexamined Japanese Patent Application Publication No. 2022-057561
Patent Literature 3: Japanese Patent No. 6635495

### Summary of Invention

### Technical Problem

However, in management of a meeting, a technique for reducing operation load necessary for a participant to register participation and a verifier to manage attendance of the participant in the meeting to enable short-time processing is strongly desired.

The present disclosure is for solving the problem as described above, and an objective of the present disclosure is to provide a management server, a terminal, a method, a program, and an information recording medium for managing an attendance verifier and an attendee in a meeting by using a machine-recognizable code.

### Solution to Problem

A management server according to the present disclosure is a management server managing an attendance verifier and an attendee in a meeting assigned with a machine-recognizable code, the management server
receiving a request transmitted by a terminal that has machine-recognized the code,
setting the meeting to valid when a terminal that has transmitted the request is a verifier terminal used by the verifier, and setting the meeting to invalid when a predetermined period has elapsed,
registering, as an attendee in the meeting, a user who uses a terminal that has transmitted the request when a terminal that has transmitted the request is not the verifier terminal and when the meeting is set to valid, and
reporting the registered attendee to the verifier or a manager of the meeting.

The management server according to the present disclosure can be configured in such a way that
the manager causes the management server to manage in advance an ID condition relating to the meeting and
replies an ID condition relating to the meeting according to an inquiry transmitted, prior to the request, by a terminal that has machine-recognized the code,
the receiver ignores the request when no ID satisfying the replied ID condition among one or more IDs recorded in the terminal is specified in the request, and
the management server determines, by using an ID specified in the request, whether a terminal that has transmitted the request is a verifier terminal.

A terminal according to the present disclosure
records one or more IDs assigned to a user who uses the terminal,
machine-recognizes a code assigned to a meeting,
transmits an inquiry to a management server managing a meeting assigned to the machine-recognized code,
receives a reply to the inquiry from the management server,
extracts an ID satisfying an ID condition specified in the received inquiry from among the one or more recorded IDs, and
transmits a request specifying the extracted ID to the management server.

### Advantageous Effects of Invention

According to the present disclosure, a management server, a terminal, a method, a program, and an information recording medium for managing an attendance verifier and an attendee in a meeting by using a machine-recognizable code can be provided.

### Brief Description of Drawings

FIG. 1 is an explanatory diagram illustrating a configuration of a management system according to one of examples of the present disclosure;
FIG. 2 is an explanatory diagram illustrating a configuration of a management server in the management system according to the present example;
FIG. 3 is an explanatory diagram illustrating a configuration of a terminal in the management system according to the present example;
FIG. 4 is an explanatory diagram illustrating a way of exchanging information in the management system according to the present example;
FIG. 5 is a flowchart illustrating a flow of control in terminal processing executed in the terminal according to the present embodiment; and
FIG. 6 is a flowchart illustrating a flow of control in management processing executed in the management server according to the present embodiment.

### Description of Embodiments

Hereinafter, an embodiment of the present disclosure is described. Note that, the present embodiment is for the illustrative purpose and does not limit the scope of the disclosure of the present application. Therefore, a person skilled in the art can adopt embodiments in which each or all of the elements thereof are substituted by equivalents thereto, but the embodiments are also included in the scope of the present disclosure.

### Basic Configuration

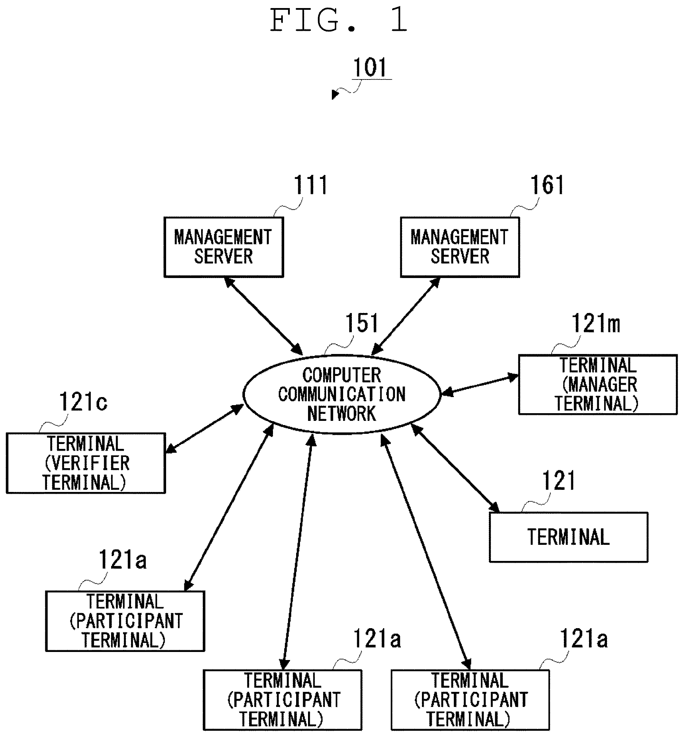

FIG. 1 is an explanatory diagram illustrating a configuration of a management system according to one of examples of the present disclosure. Hereinafter, description is given with reference to the present figure.

A management system 101 according to the present embodiment includes a management server 111 and a terminal 121. Further, the management system 101 can include an authentication server 161 as an omittable element. These pieces of equipment are communicably connected via a computer communication network 151.

The management server 111, the terminal 121, and the authentication server 161 according to the present embodiment can be achieved by executing programs according to functions thereof on hardware of various types of computers.

As the management server 111 or the authentication server 161, a web server computer or the like that provides various types of services via a web application programming interface (API) can be used.

Hereinafter, among the terminals 121, a terminal used by a possible participant who can attend a meeting is called a "participant terminal" (a sign 121a is added as appropriate.), a terminal used by a verifier who verifies a participant participating in the meeting is called a "verifier terminal" (a sign 121c is added as appropriate.), and a terminal used by a manager who manages the meeting is called a "manager terminal" (a sign 121m is added as appropriate.).

In a meeting such as a small-scale event or a party, an identical person may work as a verifier and a manager. In this case, the manager terminal 121m and the verifier terminal 121c are achieved by an identical terminal 121.

For example, in attendance management for a university class, an aspect in which an academic affairs office at a university is a manager, a student at the university who has registered for credits for the class is a possible participant, and an instructor such as a university professor who is in charge of the class is a verifier is also possible. In such an aspect in which roles of the manager and the verifier are divided, the manager can use a web interface included in the management server 111, use a web browser from the manager terminal 121m such as a personal computer, and perform management relating to a meeting with the management server 111. Further, the verifier and the possible participant can use a smartphone or the like used by himself/herself as the verifier terminal 121c and the participant terminal.

Typically, the terminal 121 functioning as the verifier terminal 121c and the participant terminal can be achieved by installing, on a smartphone used by a user for a daily work, a predetermined program called an "app".

### Computer

Hereinafter, a configuration of these computers is described. Generally, a computer reads various kinds of programs recorded in a non- transitory information recording medium into a random access memory (RAM) that is a temporary storage device, and thereafter a central processing unit (CPU) or a processor executes an instruction included in the read programs. However, in an architecture in which a read only memory (ROM) and the RAM can be mapped and executed in a single memory space, the CPU directly reads and executes an instruction included in a program stored in the ROM. The CPU, the processor, or the like controls, in cooperation with the RAM or the like, a network interface card (NIC), a Wifi communication module, and a mobile communication communication module included in the hardware, and external connection equipment such as a display, a touch screen, a microphone, a speaker, a headphone, a keyboard, a mouse, a trackpad, a touch panel, a global positioning system (GPS) sensor, a geomagnetic sensor, and a posture sensor.

A program that is executed on a computer can be recorded in a non-transitory computer-readable information recording medium such as a compact disk, a flexible disk, a hard disk, a magneto-optical disk, a digital video disk, a magnetic tape, a ROM, an electrically erasable programmable ROM (EEPROM), a flash memory, or a semiconductor memory. This information recording medium can be distributed and sold independently of each piece of hardware.

A plurality of information recording media can also be combined into a media set and distributed and sold independently of each piece of hardware as the media set, in which a program for achieving pieces of equipment is divided by function and each recorded separately as appropriate in the plurality of information recording media.

Furthermore, the above program can also be distributed to each computer from a program distribution server or the like via a transitory transmission medium such as the computer communication network 151 independently of a computer on which the program is executed. For example, when a smartphone is employed as a computer, the program can be distributed and sold through an app store for smartphones.

Note that, the above program can also be written in a programming language for operational level description of electronic circuits. In this case, various types of design diagrams such as a wiring diagram and a timing chart of an electronic circuit are generated from the above program, and an electronic circuit configuring the above image processing device can be created based on the design diagrams. For example, from the above program, the above image processing device can be configured on hardware that can be reprogrammed by field programmable gate array (FPGA) technology, or an electronic circuit dedicated for a specific application can also be configured by application specific integrated circuit (ASIC) technology.

### Configurations and coordination of Elements

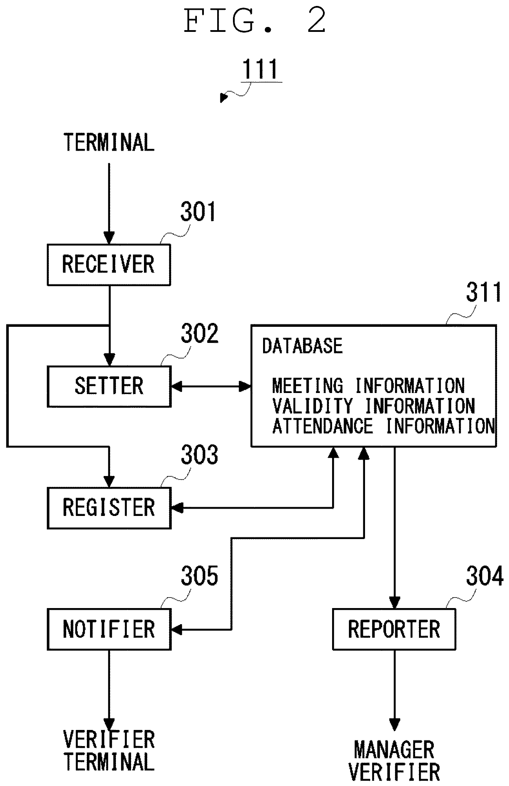

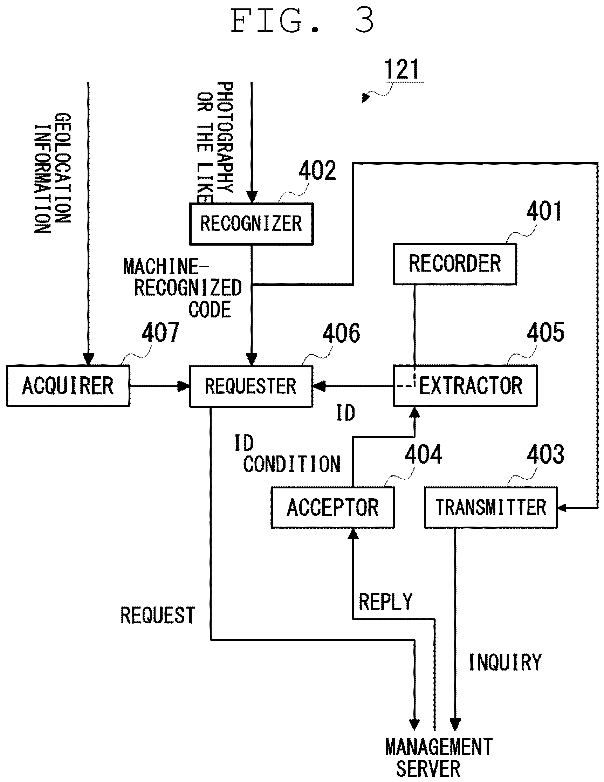

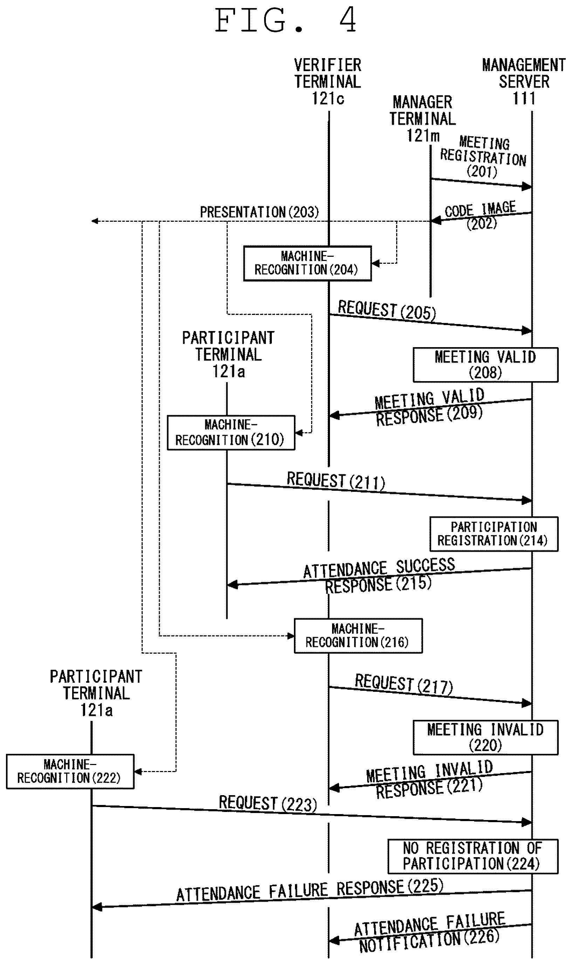

FIG. 2 is an explanatory diagram illustrating a configuration of the management server in the management system according to the present example. FIG. 3 is an explanatory diagram illustrating a configuration of the terminal in the management system according to the present example. FIG. 4 is an explanatory diagram illustrating a way of exchanging information in the management system according to the present example. Hereinafter, coordination of elements of the present embodiment in counting attendees in a certain meeting is described with reference to these figures.

As illustrated in FIG. 2, the management server 111 includes a receiver 301, a setter 302, a register 303, and a reporter 304. Further, the management server 111 may include a notifier 305 as an omittable element. Further, FIG. 4 indicates a way of communication between the management server 111 and each terminal 121.

The management server 111 manages an attendance verifier and an attendee in a meeting assigned with a machine-recognizable code. Information about each meeting itself, information on whether each meeting is valid, and information on attendance in each meeting can be managed as meeting information, validity information, and attendance information, respectively.

First, a meeting manager registers a record of meeting information relating to a desired meeting in a database 311 of the management server 111 via the manager terminal 121m (201). The record of meeting information includes information as follows.
(a) A meeting ID for identifying the meeting. The meeting ID is used to identify a meeting.
(b) A name of the meeting. The name is used to understand, recognize, and grasp the meeting by a manager who manages the meeting, a possible participant who intends to attend the meeting, and a verifier who verifies an attendee in the meeting.
(c) A verifier ID for identifying a verifier relating to the meeting. As the verifier ID, various information capable of determining the user such as an email address used by a verifier, a phone number of a smartphone configuring the verifier terminal 121c used by a verifier, or a user ID in a chat system allowing a text chat or a voice chat can be employed. Note that, in the following description, an email address is used as a user ID for identifying each user is described for ease of understanding.
(d) A manager ID for identifying a manager who manages meeting information relating to the meeting. As described above, an email address used by a manager can be used as a manager ID.

When meeting information is set as described above, validity information representing whether attendance verification by the meeting is valid and attendance information associated with the meeting information can be registered in the database 311.

Each record of validity information includes information as follows.
(m) A meeting ID relating to the meeting
(n) Whether the meeting is valid, that is, whether attendance verification for the meeting is currently performed. The information is set to invalid in an initial state.

Meanwhile, each record of attendance information includes information as follows.
(p) A meeting ID relating to the meeting.
(q) A user ID of an attendee attending the meeting.
(r) A date and time (date and time of attendance) when the attendee is verified as attending the meeting.

The management server 111 can generate, based on this record, a code image representing a machine-recognizable code based on the meeting ID.
Further, rather than the management server 111 generating a code image, the management server 111 may manage a two-dimensional code installed and posted in advance in a room or the like where an event is held, and may use the two-dimensional code based on a meeting ID. Further, instead of a two-dimensional code, an aspect in which information relating to a code is included in a beacon and transmitted by a beacon-emitting device such as a near field communication (NFC) tag or a Bluetooth tag is also included.

Hereinafter, an example in which a code image is posted is described, but an aspect can be modified in such a way that information relating to a code as described above is exchanged without a two-dimensional code, instead of a code image in the following description.

The manager receives a code image from the management server 111 via the manager terminal 121m (202). This code is posted in a host place of the meeting.
The code may be posted by the manager or an operator commissioned by the manager, or may be posted by a verifier informed by the manager or the management server 111 in the host place of the meeting.

In the code, information for determining the management server 111 and information for determining a meeting ID relating to the meeting managed in the management server 111 are embedded as appropriate. For example, a conceivable approach is to generate a URL that includes a domain name of the management server 111, a service name of meeting management, and a meeting ID as is.

Further, a URL may be generated by shortening and encoding the above as appropriate.

The manager or the verifier posts, prior to holding the meeting, the code printed on paper at a place where the meeting is held, or displays the code on a display or the like installed at a place where the meeting is held (203).

Next, as illustrated in FIG. 3, the terminal 121 configuring the participant terminal 121a or the verifier terminal 121c includes a recorder 401, a recognizer 402, and a requester 406. Further, the terminal 121 can include a transmitter 403, an acceptor 404, an extractor 405, and an acquirer 407 as omittable elements.

First, in the terminal 121, the recorder 401 records one or more IDs assigned to a user who uses the terminal. This ID is used to distinguish whether the terminal 121 is the verifier terminal 121c, the participant terminal 121a, or others.

Meanwhile, in the terminal 121, the recognizer 402 machine-recognizes a code assigned to the meeting, and the requester 406 transmits, based on the machine-recognized code, a request for specifying an ID assigned to a user who uses the terminal 121 to the management server 111.

For example, the verifier activates, by using an app running on the verifier terminal 121c, the recognizer 402 and photographs the posted or displayed code at the place where the meeting is held to obtain an image and machine-recognize the code in the image (204).

Then, the verifier terminal 121c activates the requester 406 to transmit a request specifying a user ID (which is supposed to match the verifier ID in the above meeting information.) of a user who uses the verifier terminal 121c and a machine-recognized result to the management server 111 (205).

Note that, when a URL is obtained by photographing and machine-recognizing the code, some smartphones can open the URL with a browser or can launch an app associated in advance with the URL in a case where the app has been installed on the smartphones. The URL obtained from the code preferably provides a web content that prompts a user to
launch the app when already installed, and
install the app from an app store when the app cannot be launched.

Meanwhile, when a URL is obtained by machine-recognizing the code within the app, information for determining the management server 111 and a meeting ID can be acquired by decomposing the URL or making an inquiry by a web API via the URL.

Such a function allows the requester 406 of the terminal 121 to transmit, to the management server 111 managing the meeting relating to the code, a request specifying at least
a user ID of a user who uses the terminal 121 and
a meeting ID for identifying meeting information relating to the code photographed by the user. Note that, other information that can be specified in a request is described later.

Next, in the management server 111, the receiver 301 receives the request transmitted by the terminal 121 that has machine-recognized the code.

For example, in the management server 111, the receiver 301 receives the request transmitted from the verifier terminal 121c, and determines that the terminal 121 that has transmitted the request is the verifier terminal 121c. Specifically, first, based on the result of machine recognition specified in the received request, meeting information registered in the management server 111 is determined, and then whether the user ID specified in the request matches the verifier ID in the determined meeting information is examined.

When the terminal 121 that has transmitted the request is the verifier terminal 121c used by the verifier, in the management server 111, the setter 302 updates validity information relating to the meeting, and sets the meeting to valid (208). Then, the management server 111 informs, by means of a meeting valid response, the verifier terminal 121c that attendance verification for the meeting is started (209).

Thereafter, a possible participant who intends to attend the meeting activates, by using an app running on the participant terminal 121a, the recognizer 402 and photographs the posted or displayed code at the place where the meeting is held to machine-recognize the code (210). This operation is similar to the operation in the verifier terminal 121c.

Then, the participant terminal 121a activates the requester 406 to transmit a request specifying a user ID (which is supposed to differ from the verifier ID in the above meeting information.) of a user who uses the verifier terminal 121a and a machine-recognized result to the management server 111 (211).

In the management server 111, the receiver 301 receives the request, and determines that the terminal 121 that has transmitted the request is not the verifier terminal 121c and that the meeting is valid.

Then, the management server 111 determines, based on the result of machine recognition specified in the received request, meeting information registered in the management server 111, and performs participation registration by registering, in the database 311 relating to attendance information, a record including a meeting ID relating to the determined meeting information, a user ID specified in the request, and a date and time when the request is transmitted or received or a current date and time (214).

In this way, the register 303 of the management server 111 interprets the terminal 121 that has transmitted the request as the participant terminal 121a when the terminal 121 that has transmitted the request is not the verifier terminal 121c and the meeting is set to valid, interprets the user using the participant terminal 121a as a possible participant, and registers the possible participant as an attendee in the meeting.

Thereafter, the management server 111 sends, to the participant terminal 121a, an attendance success response representing that participation in the meeting has been registered (215).

By each possible participant executing the pieces of processing with the own individual participant terminal 121a, attendance of each possible participant in the meeting is registered in the management server 111.

Thereafter, at a point in time of closing participation verification, the verifier activates, by using the app running on the verifier terminal 121c, the recognizer 402 and photographs the posted or displayed code at the place where the meeting is held to machine-recognize the code (216).

Note that, "photography or the like" is indicated in FIG. 3. That is, the recognizer 402 may machine-recognize a picture image of the photographed code as described above, or may machine-recognize the code by detecting a beacon emitted by an NFC tag, a Bluetooth tag, or the like.

Then, the verifier terminal 121c activates the recognizer 402 to transmit a request specifying a user ID (which is supposed to match the verifier ID in the above meeting information.) of a user who uses the verifier terminal 121c and a machine-recognized result to the management server 111 (217).

In the management server 111, the receiver 301 receives the request, and determines that the terminal 121 that has transmitted the request is the verifier terminal 121c.

Then, in the management server 111, the setter 302 updates validity information relating to the meeting, and sets the meeting to invalid (220). Furthermore, the management server 111 transmits, to the verifier terminal 121c, a meeting invalid response representing that attendance verification is ended (221).

Note that, as illustrated in FIG. 4, when the participant terminal 121a machine-recognizes the code (222) and transmits a request to the management server 111 (223) at a time when the meeting is invalid, participation registration is not performed (224) because it is determined that the terminal 121 that has transmitted the request is not the verifier terminal 121c and that the meeting is invalid.

In this case, the management server 111 transmits, to the participant terminal 121a, an attendance failure response representing that registration of participation in the meeting has failed (225).

Note that, when attendance has not been registered for the request, the notifier 305 of the management server 111 can transmit, to the verifier terminal 121c, an attendance failure notification representing that attendance registration relating to a user ID specified in the request has not been performed (226), as illustrated in FIG. 4. Thereby, the verifier can know possibility of incorrect attendance registration.

Note that, although not directly illustrated in FIG. 4, attendance registration fails (processing similar to 222 to 226) also when the verifier forgets to photograph the code for starting attendance verification, that is, when the participant terminal 121a machine-recognizes the code and transmits a request (processing similar to 222 to 224) earlier than machine recognition (204) by the verifier terminal 121c, and thus, the verifier can be notified of the failure.

Further, an attendance flag indicating whether attendance is permitted may be prepared in each record of attendance information, and information such as "approved" when attendance is permitted and "denied" when not permitted may be recorded. Then, the management server 111 registers attendance information with a flag of "denied" in the database 311.

In the management server 111, the reporter 304 reports the registered attendee to the verifier or the manager of the meeting (not illustrated).

For example, when the verifier sends an inquiry about an attendance status to the management server 111 via the verifier terminal 121c, the management server 111 reports attendance of the possible participant by providing attendance information to the verifier terminal 121c.

Similarly, the management server 111 can report, to the manager, these pieces of information relating to attendance in the meeting in response to an inquiry about an attendance status from the manager terminal 121m.

In the above aspect, switching between valid and invalid of the meeting can be performed every time a machine-recognizable code is machine-recognized by the verifier terminal 121c. Thus, the verifier can start and end attendance verification by only photographing the code.

Further, the possible participant can register attendance in the meeting by only machine-recognizing the above code with the participant terminal 121a.

Note that, when meeting information includes a scheduled end date and time of the meeting, in the management server 111, the setter 302 may automatically set the meeting to invalid when the meeting is valid at a time of reaching the scheduled end date and time.

Besides the above, when meeting information includes an attendance verification time length or when a prescribed attendance verification time length is set, in the management server 111, the setter 302 may automatically set the meeting to invalid once these time lengths have elapsed from start of attendance verification.

While each record of validity information includes information on whether the meeting is valid as described above, timing for invalidating the meeting can be managed upon specification of information validating the meeting when the record includes a final deadline by which the meeting is valid.

In these aspects, end processing is automatically performed even when the verifier forgets processing for ending attendance verification.

### Geolocation Information

In the above aspect, geolocation information that determines a location of the terminal 121 based on global positioning system (GPS) information, Wifi access point information, or the like detected in the terminal 121 can be used. Hereinafter, this aspect is described.

When a user of the terminal 121 causes the terminal 121 to machine-recognize a code, the terminal 121 activates the acquirer 407 to acquire geolocation information representing a location of the terminal 121.

Then, when the terminal 121 transmits a request to the management server 111, the acquired geolocation information shall also be included in the request.

The geolocation information specified in a request transmitted from the verifier terminal 121c is considered as representing a location where the meeting is being held. In view of this, the geolocation information sent from the verifier terminal 121c shall be included in a record of meeting information as a host place of the meeting.

The geolocation information specified in a request transmitted from the participant terminal 121a is considered as representing a location where the possible participant intends to participate in a meeting.

Therefore, in a meeting of a nature that requires actual presence at a place where the meeting is being held in order to attend the meeting, such as, for example, a face-to-face class or a stamp rally, attendance may be verified only when a location represented by the geolocation information specified in the request transmitted from the participant terminal 121a and a location represented by the geolocation information included in a record of validity information are sufficiently close.

Whether both locations are sufficiently close can be most simply determined by whether a distance between the locations represented by both pieces of the geolocation information is equal to or less than a predetermined threshold value. In this case, a range of a distance from a host place included in validity information being equal to or less than the predetermined threshold value is a host region of the meeting.

Further, the locations represented by both pieces of the geolocation information may be narrowed down to a desired level of address or residence details, such as prefecture, municipality, and block and street numbers, and determination may be made by whether the narrowed-down addresses or residences are consistent. In this case, a region of an address or residence of a host place included in validity information being narrowed down to the desired level of details is a host region of the meeting.

According to the present aspect, regarding a meeting in which attendance is based on presence of a possible participant at a place where the meeting is being held, attendance verification can be started by a verifier simply going to the place to machine-recognize a code, facilitating verification of attendance based on whether the possible participant has actually come to the place.

### Restriction on Verification Place/Participation Place

In the above aspect, a host place or a host region of a meeting is determined based on geolocation information of the verifier terminal 121c, but a place where participation in a meeting is allowed may be set for each verifier or each scheduled participant. For example, when a meeting is held by an online conferencing system, restrictions can be set on from which place and in which meeting a verifier or a scheduled participant participates.

In the present aspect, the manager causes the management server 111 to manage in advance a region where a verifier and a scheduled participant who plans to participate in the meeting can participate in the meeting.

As described above, a request transmitted from the terminal 121 includes geolocation information representing a location where a terminal has machine-recognized a code.

Then, the setter 302 prevents the meeting from being set to valid
when, although a terminal that has transmitted the request is the verifier terminal 121c,
a location represented by geolocation information included in the request is outside a region where a verifier can participate managed by the management server 111.

Note that, similarly to the above aspect, the setter 302 sets the meeting to valid when a location represented by geolocation information included in the request from the verifier terminal 121c is inside a region where a verifier can participate.

Meanwhile, the register 303 prevents a user who uses a terminal that has transmitted the request from being registered as an attendee in the meeting
when the terminal that has transmitted the request is not the verifier terminal 121c,
when the meeting is set to valid, and
when, although the user who uses the terminal that has transmitted the request is a scheduled participant for which a region where the scheduled participant can participate is managed by the management server 111,
a location represented by geolocation information included in the request is outside a region where the scheduled participant can participate managed by the management server 111.

Note that, similarly to the above aspect, the setter 302 registers that the (possible) participant has attended the meeting when the meeting is valid and when a location represented by geolocation information included in the request from the participant terminal 121a is within a region where the (possible) participant can participate.

According to the present embodiment, in a case of online classes at a university, a student can be required to attend a class online by accessing from inside the university or from home as a condition of attendance.

Further, the present system can be also used by an instructor who teaches a class at a university as a part of instructor's labor management by configuring the system to require the instructor to access from inside the university or from home to teach the class.

### Management of Plurality of User IDs

Hereinafter, an aspect in which a user of the terminal 121 can have a plurality of user IDs is described.

The terminal 121 according to the present aspect manages, by using an app running on the terminal 121, a user ID of a user who uses the terminal 121 and a private key of a key pair generated in association with the user ID.

As described above, an email address is used typically as a user ID. When an email address common to a plurality of services is used, the same private key is used in the plurality of services.

In a publicly known public-key cryptosystem, since a plurality of public keys can be made from a single private key, different public keys can be generated for each service and key pairs common in a private key but different in a public key from each other can be used.

Further, different user IDs can also be used for each service, and a key pair of a public key and a private key neither of which overlaps with those of other services can also be used. For example, an email address accompanied with information for identifying a service such as a domain name for the service may be used as a user ID.

A user who uses the terminal 121 can have a plurality of email addresses according to applications thereof. In this case, different key pairs are generated for the email addresses and are associated with the email address. Accordingly, in the terminal 121, different private keys are recorded for different email addresses.

In the terminal 121, a public key can be managed together with a private key. Furthermore, when a key pair is generated in the terminal 121, a public key may be registered in a key server such as the authentication server 161 in association with an email address so that the public key can be widely used.

The key server such as the authentication server 161 can work together with an app running on the terminal 121 to certify that a user of the app owns and uses the registered email address. For example, a conceivable procedure for generating a key pair for a desired email address by using the terminal 121 may include the following.
(1) A user inputs a desired email address to an app running on the terminal 121.
(2) A key pair for the email address is generated in the terminal 121.
(3) The email address and a public key of the key pair are sent from the terminal 121 to the key server such as the authentication server 161.
(4) The key server such as the authentication server 161 transmits an email to the email address.
(5) A receiver of the email accesses a universal resource locator (URL) written in the email via a browser or inputs collation information written in the email to the key server such as the authentication server 161 within a predetermined period, thereby informing the key server such as the authentication server 161 that the email address is valid.
(6) The key server such as the authentication server 161 registers and publishes the email address found to be valid and the public key in a database.
(7) Furthermore, the key server such as the authentication server 161 may issue and send an electronic certificate for the email address to the terminal 121.

In this way, by the key server such as the authentication server 161 working together with the terminal 121, a third party can send information addressed to the email address encrypted with a public key and verify that a signer of the information electronically signed using a private key is an owner of the email address. Further, by using certificate information such as an electronic certificate sent to the terminal 121, a user who uses the terminal 121 can cause the key server such as the authentication server 161 to certify the email address used by the user.

These functions based on the public-key system can be used in authenticating, by the management server 111, a user who uses the terminal 121 that has accessed the management server 111 from the terminal 121.

Note that, application based on the public-key system as described above may be omitted, and the management server 111 may directly authenticate a user of the terminal 121 when the terminal 121 accesses the management server 111.

In this way, when a plurality of user IDs is managed in the terminal 121, it is necessary to select which user ID to specify in sending a request to the management server 111. The simplest aspect of this selection is that a user of the terminal 121 performs this selection by himself/herself when the code is machine-recognized, but hereinafter, an aspect for saving labor of this selection is described.

In an aspect described below, a manager shall specify, by using each record of meeting information, an ID condition for determining a verifier who verifies attendance in the meeting and a possible participant who can participate in the meeting. Accordingly, the management server 111 manages in advance an ID condition relating to the meeting.

For example, in an aspect in which an email address including a domain name of a university is given to a university student to manage attendance in a class by the email address, the domain name is employed as an ID condition.

Note that, in a case of setting no restriction on a possible participant, configuration may be made in such a way that "always satisfied" is set in meeting information as an ID condition and any ID for request satisfies the ID condition.

The terminal 121 that has machine-recognized a code activates the transmitter 403 to transmit an inquiry to the management server 111 managing a meeting assigned to the machine-recognized code, prior to transmitting a request to the management server 111.

In response to the inquiry, the management server 111 determines meeting information based on the code specified in the inquiry and replies an ID condition relating to the meeting information to the terminal 121.

The terminal 121 accepts, by the acceptor 404, a reply from the management server 111. Then, the terminal 121 extracts, by the extractor 405, an email address satisfying the replied ID condition from among email addresses managed by the terminal 121, and specifies the extracted email address when transmitting a request by the requester 406.

Thereby, even when a user of the terminal 121 manages a plurality of email addresses in the terminal 121, any of the email addresses is automatically selected when the user of the terminal 121 starts or ends attendance verification or when registers attendance in a meeting, which can save labor of the user of the terminal 121.

Further, when no email address managed in the terminal 121 satisfies the ID condition, the user of the terminal 121 is determined as not a verifier of the meeting nor a person who can participate in the meeting, which prevents the terminal 121 from transmitting a request to the management server 111.

Thereby, unnecessary communication traffic can be prevented in the management server 111.

Further, when a plurality of email addresses is extracted, the terminal 121 causes the user to select which email address to use.

Note that, when a policy of not giving a plurality of email addresses having the same domain to an identical person is employed in domain management for email addresses, an app on the terminal 121 limits and checks email addresses to comply with the policy, so that a plurality of email addresses is not extracted for an ID condition relating to a domain name. In such an aspect, "answering the roll for someone else" (a misconduct in which a substitute person replies to a verifier to pretend that an absent person is present.) can be prevented.

As an ID condition, a condition other than a domain name can also be employed. For example, in a meeting or the like requiring preliminary registration of an email address to attend a small-scale event, a list of preliminarily registered email addresses can also be employed as an ID condition.

The list may be replied as an ID condition to an inquiry from the terminal 121. However, instead of the preliminarily registered email addresses per se, information alternative thereto can be replied as an ID condition in terms of privacy.

For example, a list of hash values of the preliminarily registered email addresses can be replied as an ID condition. In this aspect, the terminal 121 computes hash values for email addresses managed by the own terminal, and extracts an email address hashed into a hash value appearing in the list relating to an ID condition.

In this aspect, a coincidental collision of hash values may occur, but the management server 111 can register attendance only for a possible participant relating to a preliminary registered email address by comparing a list of email addresses recorded as an ID condition in a record of meeting information with an email address specified in a request.

Besides the above, a public key relating to a preliminarily registered email address may be acquired from the key server such as the authentication server 161, and a code including
a default value,
the email address,
the public key, or
information combining the above as appropriate
may be encrypted with the public key. In this aspect, a list as a result of encryption is replied as an ID condition.

The terminal 121 attempts to decrypt each cipher included in the list replied as an ID condition with a private key of each email address managed in the terminal 121.

Then, after successful decryption, the terminal 121 examines whether a result of the decryption is consistent with a code attainable in the terminal 121, and extracts the email address when consistent.

In this aspect, a user of the terminal 121 who manages a plurality of user IDs in the terminal 121 can inform the management server 111 of only a user ID with which the user can participate in a meeting among the user IDs that the user has, while keeping other user IDs hidden from the management server 111.

Further, the management server 111 can inform each terminal 121 of a user ID with which a user can participate in a meeting not as is, but in such a way that a user ID of another user cannot be attained.

Accordingly, in this aspect, attendance in a meeting can be managed in consideration of privacy and security.

Note that, as an ID condition, a user ID of a verifier in a meeting and a user ID with which a user can participate in the meeting may be replied distinctively. For example, such an aspect can also be employed in which a user ID of a verifier is not particularly encrypted but a user ID with which a user can participate is encrypted as described above while both are listed separately.

In this aspect, the terminal 121 can also perform different processing according to whether an ID extracted as satisfying an ID condition is a verifier ID or a user ID with which a user can participate in a meeting.

In this aspect, the management server 111 determines, by using an ID specified in a request, whether the terminal 121 that has transmitted the request is the verifier terminal 121c. Here, when the terminal 121 is not the verifier terminal 121c, that is, when the ID specified in the request does not match a verifier ID, whether the ID specified in the request satisfies an ID condition of the meeting is determined, and, when not satisfied, the receiver 301 of the management server 111 ignores the request. Thereby, only attendance of a user who can participate in the meeting is managed in the management server 111.

Note that, in a case of combining the present embodiment with a mode of using the above geolocation information, configuration may be made in such a way that the acquirer 407 acquires geolocation information indicating a location of the terminal when an ID satisfying an ID condition is extracted in the terminal 121.

### Linkage with Authentication Server

Hereinafter, an aspect in which the management server 111 and the authentication server 161 work together to identify a user using the terminal 121 is described.

In the present aspect, the terminal 121 attempts to sign in to the authentication server 16 linked with the management server 111 prior to machine-recognizing a code.

Typically, sign-in to the authentication server 161 is performed upon launching an app on the terminal 121.

Then, when the sign-in is successful, the terminal 121 is enabled to machine-recognize a code.

Further, after the successful sign-in, the sign-in state of the terminal 121 may continue for a fixed period, and even when the app is launched again within the period, it may be unnecessary to sign in again. Further, when the app is launched again within the period, the period may be extended in such a way that the sign-in state continues for the fixed period from a point in time when the app is launched again.

When the sign-in is successful, the authentication server 161 may give certificate information for certifying each of one or more IDs stored in the terminal 121 to the terminal 121.

A validity period of this certificate information can be a fixed period after the successful sign-in to the authentication server 161. In a case of extending the sign-in duration, certificate information with a new validity period after extension is given from the authentication server 161 to the terminal 121.

This aspect is suitable when the authentication server 161 has already verified email address ownership for each of IDs managed by the terminal 121.

Then, the terminal 121 can certificate that the user of the terminal 121 owns an extracted ID by specifying, in a request, certificate information on the extracted ID.

In this aspect, the management server 111 can authenticate the ID specified in the request by using the certificate information specified in the request.

### Flow of Controlling Terminal

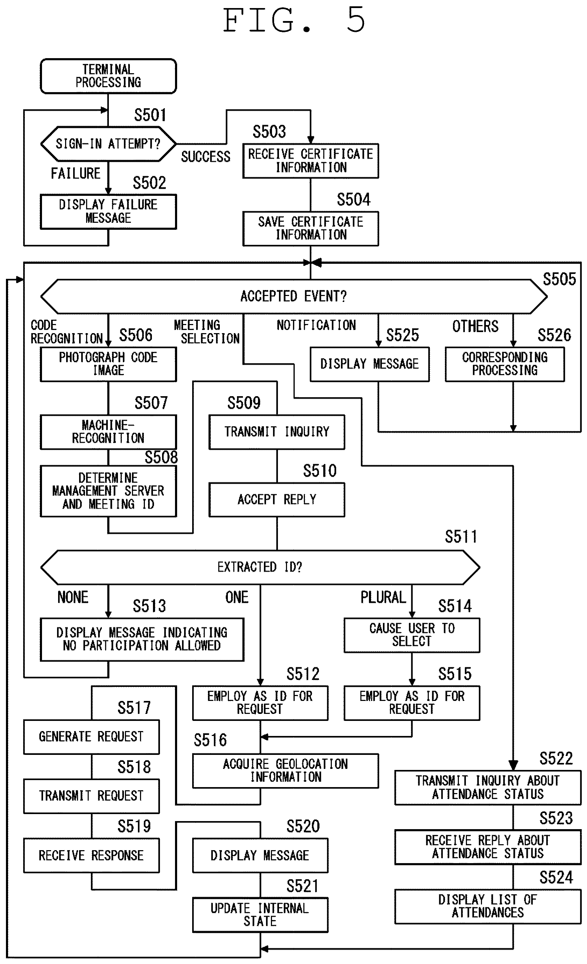

FIG. 5 is a flowchart illustrating a flow of control in terminal processing executed in the terminal according to the present embodiment. Hereinafter, description is given with reference to the present figure. Note that, processing relating to the following description can be omitted, modified, or reordered as appropriate according to the embodiment.

The present processing is started by launching an app on the terminal 121. Note that, in many smartphones, an app running in the foreground can be shifted to the background or the suspended state, or returned to the foreground state to resume processing. In such a case, processing can also be resumed from the middle.

First, the app running on the terminal 121 attempts to sign in to the authentication server 161 in order to authenticate a user of the terminal 121 (Step S501).

In the attempt, typically, the user of the terminal 121 is asked to enter a user name and a password, and these pieces of information are sent to the external authentication server 161. Note that, once the sign-in to the external authentication server 161 succeeds, authentication to the authentication server 161 may be omitted for a fixed period, as described above.

As a password, various aspects can be applied, such as
a fixed password,
a one-time password displayed on a hardware token or a software token and time-synchronized with the authentication server 161, and
a password in which elements picked up from a table provided from the authentication server 161, the table being displayed on the terminal 121, are arranged in order based on a rule assigned to a user.

Further, an aspect in which an app running on the terminal 121 allows passwordless authentication such as fast identity online (FIDO) authentication can also be employed.

Further, instead of authentication by the authentication server 161 or in addition to the authentication, a technique such as biometric authentication with a face or a fingerprint of a user by means of the terminal 121, or verification of a user within the terminal 121 by using a PIN code such as a personal identification number may be applied. These simplified authentication may also be applied when an app shifts from the background to the foreground.

When sign-in fails (Step S501; failure), the terminal 121 displays a message of the failure (Step S502), returns the control to Step S501, and repeats processing until sign-in succeeds.

When sign-in succeeds (Step S501; success), the terminal 121 receives certificate information transmitted from the authentication server 161 (Step S503), and saves the certificate information (Step S504). This certificate information is for certifying, by the authentication server 161, that the user of the terminal 121 can use each of IDs managed in the terminal 121, as described above. The certificate can have a fixed validity period after successful authentication.

Thereafter, the terminal 121 accepts an event relating to an instruction from the user or a notification from other equipment (Step S505).

When a code recognition instruction is accepted by the user (Step S505; code recognition), the terminal 121 activates a camera photography function, photographs an image of a code under an operation of the user (Step S506), and machine-recognizes the photographed code (Step S507).

Then, the terminal 121 determines the management server 111 and a meeting ID based on the machine-recognized code (Step S508).

Then, the terminal 121 transmits, to the management server 111, an inquiry about an ID condition relating to the meeting ID (Step S509).

When a reply in which an ID condition is specified is accepted from the management server 111 (Step S510), the terminal 121 extracts an ID satisfying the ID condition from among IDs stored in the terminal 121 (Step S511).

When no ID satisfying the ID condition is extracted (Step S511; none), the terminal 121 displays a message indicating that no participation in the meeting is allowed (Step S513), and returns the control to Step S505.

Meanwhile, when only one ID satisfying the ID condition is extracted (Step S511; one), the ID is employed as an ID for request to be specified in a request (Step S512).

Meanwhile, when a plurality of IDs satisfying the ID condition is extracted (Step S511; plural), the terminal 121 causes the user to select any of the IDs (Step S514), and employs the selected ID as an ID for request to be specified in a request (Step S515).

When the ID for request is employed, (Steps S512 and S515), the terminal 121 acquires geolocation information indicating a location of the terminal 121 (Step S516).

Then, the terminal 121 generates a request in which
the ID for request that is (one of) the ID(s) extracted as satisfying the ID condition,
the meeting ID determined from the machine-recognized code, and
the geolocation information acquired as representing a location of the terminal 121 are specified (Step S517), and transmits the request to the management server 111 determined from the machine-recognized code (Step S518).

Then, the terminal 121 receives a response from the management server 111 to the request (Step S519). The response may include types such as
a meeting valid response indicating that the terminal 121 is the verifier terminal 121c of the meeting relating to the meeting ID, and the meeting is set to valid,
a meeting invalid response indicating that the terminal 121 is the verifier terminal 121c of the meeting relating to the meeting ID, and the meeting is set to invalid,
an attendance success response indicating that the terminal 121 is the participant terminal 121a of the meeting relating to the meeting ID, and attendance of the user of the participant terminal 121a in the meeting has been registered,
an attendance failure response indicating that the terminal 121 is the participant terminal 121a of the meeting relating to the meeting ID, but registration of attendance of the user of the participant terminal 121a in the meeting has failed, and
an error response representing that there is some kind of problem in a relationship between the terminal 121 and the meeting relating to the meeting ID.

Then, the terminal 121 displays a message according to the received response on a screen (Step S520), updates an internal state of the terminal 121 according to the response (Step S521), and returns the control to Step S505.

The internal state of the terminal 121 includes, for example, that the terminal 121 receives a meeting valid response or a meeting invalid response and records a meeting ID of a case in which the terminal 121 is approved as the verifier terminal 121c by the management server 111.

When a meeting selection instruction of selecting a meeting ID of a case in which the terminal 121 is approved as the manager terminal 121m by the management server 111 is accepted from the user who uses the terminal 121 (Step S505; meeting selection), the terminal 121 transmits, to the management server 111, an inquiry about an attendance status of a meeting relating to the meeting ID (Step S522).

Then, the terminal 121 receives a reply transmitted from the management server 111 in response to the inquiry (Step S523).

Since the reply includes which user, among users who can participate in the meeting relating to the meeting ID, has succeeded in attendance registration (present), which user has not attempted to register attendance by the terminal 121 (absent), and which user has attempted to register attendance by the terminal 121 but has failed in attendance registration (late/attendance condition, or the like), the terminal 121 displays a list of attendance statuses based on the reply on the screen (Step S524), and returns the control to Step S505. This processing allows a verifier to browse, at a desired timing, the attendance statuses of the meeting in which attendance is being verified by himself/herself.

Note that, in a situation where the terminal 121 is registered in advance in the management server 111 as the verifier terminal 121c for a certain meeting, when the terminal 121 registered in advance in the management server 111 as a terminal to be used by a user who can participate in the meeting transmits a request to the management server 111 while the meeting is not valid,
a case in which the user of the terminal 121 that has transmitted the request is late for the meeting,
a case in which the user of the terminal 121 that has transmitted the request misunderstands a date and time of the meeting, and
a case in which the verifier forgets to set the meeting to valid may be possible. Further,
when a request is made by other than the verifier terminal 121c while the meeting is invalid or the like,
the request may possibly be an unauthorized access.

In view of the above, a notification is given from the management server 111 to the verifier terminal 121c in such a case. When the notification is accepted by the terminal 121 (Step S505; notification), the terminal 121 displays a message relating to the notification on the screen (Step S525), and returns the control to Step S505.

Besides the above, when other instructions or the like are accepted by the terminal 121 (Step S505; others), the terminal 121 executes corresponding processing (Step S526), and returns the control to Step S505.

By performing control as described above, the verifier who verifies attendance in the meeting can switch between validation and invalidation of the meeting only by photographing a code. Further, the verifier can also verify an attendance status of the meeting. Furthermore, the verifier can notice by a notification that there has been an attempt of unauthorized participation in the meeting or that the verifier forgets to validate the meeting.

Note that, configuration may be made in such a way that, every time attendance of any possible participant is registered, the management server 111 notifies the verifier terminal 121c of the registration. In this aspect, the verifier can easily verify with the verifier terminal 121c that a new possible participant has attended the meeting.

Further, in Steps S509 to S515, even when a plurality of IDs is managed in the terminal 121, an ID relating to the meeting can be (semi)automatically extracted by making an inquiry from the terminal 121 to the management server 111, and other IDs managed in the terminal 121 can be kept confidential to the management server 111.

### Flow of Control of Management Server

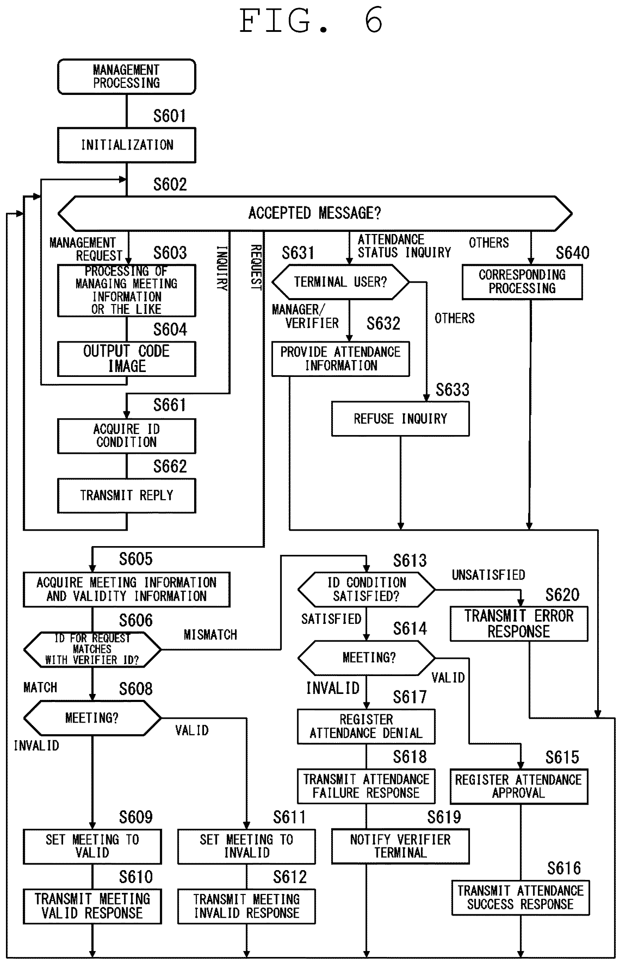

FIG. 6 is a flowchart illustrating a flow of control in management processing executed in the management server according to the present embodiment. Hereinafter, description is given with reference to the present figure. Note that, processing relating to the following description can be omitted, modified, or reordered as appropriate according to the embodiment.

The present processing is executed in the management server 111. Once the present processing is started, the management server 111 performs necessary initialization (Step S601), and accepts a message from each piece of equipment (Step S602).

When the message accepted here is a management request from the manager terminal 121m (Step S602; management request), the management server 111 performs, according to an instruction specified in the management request, management processing such as initialization, addition, edition, correction, or deletion of meeting information, validity information, attendance information, or the like (Step S603), performs output, printing, or the like of an image of a machine-recognizable code (Step S604), and returns the control to Step S602.

When the accepted message is an inquiry (Step S602; inquiry), the management server 111 acquires an ID condition from meeting information for a meeting ID specified in the inquiry (Step S661), transmits a reply specifying the ID condition to the terminal 121 that has transmitted the message (Step S662), and then returns the control to Step S602.

Meanwhile, when the accepted message is a request transmitted from an app on the terminal 121 (Step S602; request), the management server 111 acquires meeting information and validity information for a meeting ID specified in the request (Step S605).

Then, the management server 111 compares an ID for request specified in the request with (each of) verifier IDs specified in the acquired meeting information (Step S606).

When the ID for request matches (any of) the verifier IDs (Step S606; match), the terminal 121 that has transmitted the request is the verifier terminal 121c. Next, the management server 111 examines, based on the acquired validity information, whether a meeting state for the meeting ID is valid or invalid (Step S608).

When the meeting is invalid (Step S608; invalid), the management server 111 updates the validity information, and sets the meeting to valid (Step S609). Then, the management server 111 transmits a meeting valid response to the verifier terminal 121c that has transmitted the request (Step S610), and then returns the control to Step S602.

Meanwhile, when the meeting is valid (Step S608; valid), the management server 111 updates the validity information, and sets the meeting to invalid (Step S611). Then, the management server 111 transmits a meeting invalid response to the verifier terminal 121c that has transmitted the request (Step S612), and then returns the control to Step S602.

Next, when the ID for request does not match any of the verifier IDs acquired from the meeting information (Step S606; mismatch), whether the ID for request satisfies an ID condition relating to the meeting information is examined (Step S613).

When the ID condition is satisfied (Step S613; satisfied), the terminal 121 that has transmitted the request is the participant terminal 121a used by a possible participant in the meeting. In view of this, the management server 111 examines, based on the acquired validity information, whether a meeting state for the meeting ID is valid or invalid (Step S614).

When the meeting is valid (Step S614; valid), the management server 111 updates the attendance information relating to the meeting ID of the ID for request, and registers that attendance in the meeting of the possible participant relating to the ID for request is "approved" (Step S615). Then, the management server 111 transmits an attendance success response to the participating terminal 121a that has transmitted the request (Step S616), and then returns the control to Step S602.

Meanwhile, when the meeting is invalid (Step S614; invalid), the management server 111 updates the attendance information relating to the meeting ID of the ID for request, and registers that attendance in the meeting is "denied" (Step S617). Then, the management server 111 transmits an attendance failure response to the participant terminal 121a that has transmitted the request (Step S618).

Furthermore, the management server 111 determines the verifier terminal 121c that has set the meeting to valid before the meeting is set to invalid. Then, the management server 111 notifies the determined verifier terminal 121c that there has been a request from the participating terminal 121a but attendance has been denied (Step S619), and returns the control to Step S602. In order to enable this notification, the management server 111 records, within the management server 111, a communication identifier that is a destination so that a notification can be transmitted to the verifier terminal 121c when the meeting is validated by the verifier terminal 121c.

When the ID condition relating to the meeting information is not satisfied by the ID for request (Step S613; unsatisfied), the management server 111 transmits an error response to the terminal 121 that has transmitted the request (Step S620), and then returns the control to Step S602. Note that, in this case, a request record such as the ID for request may be recorded in order that a follow-up investigation can be performed as to whether the request is simply an error or an unauthorized access.

Next, when the accepted message is an attendance status inquiry (Step S602; attendance status inquiry), the management server 111 examines whether a user of the terminal 121 that has transmitted the inquiry is a manager or a verifier of the meeting relating to a meeting ID specified in the inquiry. When so (Step S631; manager/verifier), the management server 111 transmits, to the terminal 121 that has terminated the inquiry, attendance information of the meeting relating to the meeting ID specified in the inquiry (Step S632), and returns the control to Step S602.

Further, when a user of the terminal 121 that has transmitted the inquiry is neither a manager nor a verifier of the meeting (Step S631; others), the management server 111 transmits a refusal of the attendance status inquiry to the terminal 121 that has terminated the inquiry (Step S633), and returns the control to Step S602.

When the accepted message is about other contents (Step S602; others), the management server 111 executes processing corresponding to the message (Step S640), and returns the control to Step S602.

By the management server 111 executing such processing in cooperation with the terminal 121, a verifier can easily verify attendance of a possible participant in a meeting.

In the above description, description of restrictions on a verification location/participation location based on geolocation information is omitted. However, by adding processing based on geolocation information specified in a request transmitted by the terminal 121 to the above control, suitability as a verifier can be determined, a host location of a valid meeting can be limited, and a region where a possible participant can attend a meeting can be restricted, as described above.

As described above, the management server according to the present embodiment is a management server managing an attendance verifier and an attendee in a meeting assigned with a machine-recognizable code, and the management server includes:
a receiver receiving a request transmitted by a terminal that has machine-recognized the code;
a setter setting the meeting to valid when a terminal that has transmitted the request is a verifier terminal used by the verifier, and setting the meeting to invalid when a predetermined period has elapsed;
a register registering, as an attendee in the meeting, a user who uses a terminal that has transmitted the request when a terminal that has transmitted the request is not the verifier terminal and when the meeting is set to valid; and
a reporter reporting the registered attendee to the verifier or a manager of the meeting.

The management server can be configured in such a way that
the request includes geolocation information representing a location where the terminal has machine-recognized the code,
the setter records, as a host region of the valid meeting, a region within a predetermined range including a location represented by geolocation information included in the request when a terminal that has transmitted the request is the verifier terminal, and
the register prevents a user who uses a terminal that has transmitted the request from being registered as an attendee in the meeting when a terminal that has transmitted the request is not the verifier terminal, when the meeting is set to valid, and when a location represented by geolocation information included in the request is outside a range of a host region of the valid meeting.

The management server can be configured in such a way that
the manager causes the management server to manage in advance a region where the verifier and a scheduled participant who plans to participate in the meeting can participate in the meeting,
the request includes geolocation information representing a location where the terminal has machine-recognized the code,
the setter prevents the meeting from being set to valid when a terminal that has transmitted the request is the verifier terminal and when a location represented by geolocation information included in the request is within a region where the verifier can participate managed by the management server, and
the register prevents a user who uses a terminal that has transmitted the request from being registered as an attendee in the meeting when a terminal that has transmitted the request is not the verifier terminal, when the meeting is set to valid, when a user who uses a terminal that has transmitted the request is a scheduled participant for which a region where the scheduled participant can participate is managed by the management server, and when a location represented by geolocation information included in the request is outside a region where the scheduled participant can participate managed by the management server.

The management server can be configured in such a way that the verifier is the manager and manages a scheduled participant who plans to participate in the meeting via the verifier terminal.

The management server can be configured in such a way that
the manager causes the management server to manage in advance an ID condition relating to the meeting and
replies an ID condition relating to the meeting according to an inquiry transmitted, prior to the request, by a terminal that has machine-recognized the code,
the receiver ignores the request when no ID satisfying the replied ID condition among one or more IDs recorded in the terminal is specified in the request, and
the management server determines, by using an ID specified in the request, whether a terminal that has transmitted the request is a verifier terminal.

The management server can be configured in such a way that
the terminal
attempts to sign in to an authentication server linked with the management server prior to machine-recognizing the code,
is enabled to machine-recognize the code when the sign-in is successful, and
is prevented from transmitting the request when no ID satisfying the replied ID condition is recorded.

The management server can be configured in such a way that
the authentication server gives, to the terminal, certificate information for certifying each of one or more IDs stored in the terminal when the sign-in is successful,
the terminal specifies, in the request, certificate information given to the terminal in order to certify the extracted ID, and
the management server authenticates, by using certificate information specified in the request, an ID specified in the request.

The management server can be configured in such a way that the certificate information is valid until a predetermined period of time has elapsed after the successful sign-in.

The management server can be configured in such a way that the setter sets the meeting to invalid when a terminal that has transmitted the request is the verifier terminal and when the meeting is set to valid.

The management server can be configured to further include a notifier notifying the verifier terminal that the meeting is set to invalid when a terminal that has transmitted the request is not the verifier terminal and when the meeting is set to invalid.

The terminal according to the present embodiment includes:
a recorder recording one or more IDs assigned to a user who uses the terminal;
a recognizer machine-recognizing a code assigned to a meeting;
a transmitter transmitting an inquiry to a management server managing a meeting assigned to the machine-recognized code;
an acceptor accepting a reply to the inquiry from the management server;
an extractor extracting an ID satisfying an ID condition specified in the received inquiry from among the one or more recorded IDs; and
a requester transmitting a request specifying the extracted ID to the management server.

The terminal can be configured to further include an acquirer acquiring geolocation information indicating a location of the terminal when an ID satisfying the ID condition is extracted, wherein
the acquired geolocation information is further specified in the request.

The management method according to the present embodiment includes,
by a management server managing an attendance verifier and an attendee in a meeting assigned with a machine-recognizable code:
receiving a request transmitted by a terminal that has machine-recognized the code;
setting the meeting to valid when a terminal that has transmitted the request is a verifier terminal used by the verifier, and setting the meeting to invalid when a predetermined period has elapsed;
registering, as an attendee in the meeting, a user who uses a terminal that has transmitted the request when a terminal that has transmitted the request is not the verifier terminal and when the meeting is set to valid; and
reporting the registered attendee to the verifier or a manager of the meeting.

The terminal method according to the present embodiment includes,
by a terminal recording one or more IDs assigned to a user who uses the terminal:
machine-recognizing a code assigned to a meeting;
transmitting an inquiry to a management server managing a meeting assigned to the machine-recognized code;
receiving a reply to the inquiry from the management server;
extracting an ID satisfying an ID condition specified in the received inquiry from among the one or more recorded IDs; and
transmitting a request specifying the extracted ID to the management server.

The management program according to the present embodiment causes a computer managing an attendance verifier and an attendee in a meeting assigned with a machine-recognizable code to execute processing of:
receiving a request transmitted by a terminal that has machine-recognized the code;
setting the meeting to valid when a terminal that has transmitted the request is a verifier terminal used by the verifier, and setting the meeting to invalid when a predetermined period has elapsed,
registering, as an attendee in the meeting, a user who uses a terminal that has transmitted the request when a terminal that has transmitted the request is not the verifier terminal and when the meeting is set to valid; and
reporting the registered attendee to the verifier or a manager of the meeting.

The terminal program according to the present embodiment causes a computer recording one or more IDs assigned to a user who uses the computer to execute processing of:
machine-recognizing a code assigned to a meeting;
transmitting an inquiry to a management server managing a meeting assigned to the machine-recognized code;
receiving a reply to the inquiry from the management server;
extracting an ID satisfying an ID condition specified in the received inquiry from among the one or more recorded IDs; and
transmitting a request specifying the extracted ID to the management server.

The non-transitory computer-readable information recording medium according to the present embodiment can be configured to record at least one of the above management program or terminal program.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

### Industrial Applicability

According to the present disclosure, a management server, a terminal, a method, a program, and an information recording medium for managing an attendance verifier and an attendee in a meeting by using a machine-recognizable code can be provided.

### Reference Signs List

- 101: Management system
- 111: Management server
- 121: Terminal
- 121a: Participant terminal
- 121c: Verifier terminal
- 121m: Manager terminal
- 151: Computer communication network
- 161: Authentication server
- 301: Receiver
- 302: Setter
- 303: Register
- 304: Reporter
- 305: Notifier
- 311: Database
- 401: Recorder
- 402: Recognizer
- 403: Transmitter
- 404: Acceptor
- 405: Extractor
- 406: Requester
- 407: Acquirer

## Claims

1. A management server managing an attendance verifier and an attendee in a meeting assigned with a machine-recognizable code, the management server comprising:
a receiver receiving a request transmitted by a terminal that has machine-recognized the code;
a setter setting the meeting to valid when a terminal that has transmitted the request is a verifier terminal used by the verifier, and setting the meeting to invalid when a predetermined period has elapsed;
a register registering, as an attendee in the meeting, a user who uses a terminal that has transmitted the request when a terminal that has transmitted the request is not the verifier terminal and when the meeting is set to valid; and
a reporter reporting the registered attendee to the verifier or a manager of the meeting.

2. The management server according to Claim 1, wherein
the request includes geolocation information representing a location where the terminal has machine-recognized the code,
the setter records, as a host region of the valid meeting, a region within a predetermined range including a location represented by geolocation information included in the request when a terminal that has transmitted the request is the verifier terminal, and
the register prevents a user who uses a terminal that has transmitted the request from being registered as an attendee in the meeting when a terminal that has transmitted the request is not the verifier terminal, when the meeting is set to valid, and when a location represented by geolocation information included in the request is outside a range of a host region of the valid meeting.

3. The management server according to Claim 1, wherein
the manager causes the management server to manage in advance a region where the verifier and a scheduled participant who plans to participate in the meeting can participate in the meeting,
the request includes geolocation information representing a location where the terminal has machine-recognized the code,
the setter prevents the meeting from being set to valid when a terminal that has transmitted the request is the verifier terminal and when a location represented by geolocation information included in the request is within a region where the verifier can participate managed by the management server, and
the register prevents a user who uses a terminal that has transmitted the request from being registered as an attendee in the meeting when a terminal that has transmitted the request is not the verifier terminal, when the meeting is set to valid, when a user who uses a terminal that has transmitted the request is a scheduled participant for which a region where the scheduled participant can participate is managed by the management server, and when a location represented by geolocation information included in the request is outside a region where the scheduled participant can participate managed by the management server.

4. The management server according to Claim 3, wherein the verifier is the manager and manages a scheduled participant who plans to participate in the meeting via the verifier terminal.

5. The management server according to Claim 1, wherein
the manager causes the management server to manage in advance an ID condition relating to the meeting and
replies an ID condition relating to the meeting according to an inquiry transmitted, prior to the request, by a terminal that has machine-recognized the code,
the receiver ignores the request when no ID satisfying the replied ID condition among one or more IDs recorded in the terminal is specified in the request, and
the management server determines, by using an ID specified in the request, whether a terminal that has transmitted the request is a verifier terminal.

6. The management server according to Claim 5, wherein
the terminal
attempts to sign in to an authentication server linked with the management server prior to machine-recognizing the code,
is enabled to machine-recognize the code when the sign-in is successful, and
is prevented from transmitting the request when no ID satisfying the replied ID condition is recorded.

7. The management server according to Claim 6, wherein
the authentication server gives, to the terminal, certificate information for certifying each of one or more IDs stored in the terminal when the sign-in is successful,
the terminal specifies, in the request, certificate information given to the terminal in order to certify the extracted ID, and
the management server authenticates, by using certificate information specified in the request, an ID specified in the request.

8. The management server according to Claim 7, wherein the certificate information is valid until a predetermined period of time has elapsed after the successful sign-in.

9. The management server according to Claim 1, wherein the setter sets the meeting to invalid when a terminal that has transmitted the request is the verifier terminal and when the meeting is set to valid.

10. The management server according to Claim 1, further comprising a notifier notifying the verifier terminal that the meeting is set to invalid when a terminal that has transmitted the request is not the verifier terminal and when the meeting is set to invalid.

11. A terminal comprising:
a recorder recording one or more IDs assigned to a user who uses the terminal;
a recognizer machine-recognizing a code assigned to a meeting;
a transmitter transmitting an inquiry to a management server managing a meeting assigned to the machine-recognized code;
an acceptor accepting a reply to the inquiry from the management server;
an extractor extracting an ID satisfying an ID condition specified in the received inquiry from among the one or more recorded IDs; and
a requester transmitting a request specifying the extracted ID to the management server.

12. The terminal according to Claim 11, further comprising an acquirer acquiring geolocation information indicating a location of the terminal when an ID satisfying the ID condition is extracted, wherein
the acquired geolocation information is further specified in the request.

13. A method comprising,
by a management server managing an attendance verifier and an attendee in a meeting assigned with a machine-recognizable code:
receiving a request transmitted by a terminal that has machine-recognized the code;
setting the meeting to valid when a terminal that has transmitted the request is a verifier terminal used by the verifier, and setting the meeting to invalid when a predetermined period has elapsed;
registering, as an attendee in the meeting, a user who uses a terminal that has transmitted the request when a terminal that has transmitted the request is not the verifier terminal and when the meeting is set to valid; and
reporting the registered attendee to the verifier or a manager of the meeting.

14. A method comprising,
by a terminal recording one or more IDs assigned to a user who uses the terminal:
machine-recognizing a code assigned to a meeting;
transmitting an inquiry to a management server managing a meeting assigned to the machine-recognized code;
receiving a reply to the inquiry from the management server;
extracting an ID satisfying an ID condition specified in the received inquiry from among the one or more recorded IDs; and
transmitting a request specifying the extracted ID to the management server.

15. A management program causing a computer managing an attendance verifier and an attendee in a meeting assigned with a machine-recognizable code to execute processing of:
receiving a request transmitted by a terminal that has machine-recognized the code;
setting the meeting to valid when a terminal that has transmitted the request is a verifier terminal used by the verifier, and setting the meeting to invalid when a predetermined period has elapsed,
registering, as an attendee in the meeting, a user who uses a terminal that has transmitted the request when a terminal that has transmitted the request is not the verifier terminal and when the meeting is set to valid; and
reporting the registered attendee to the verifier or a manager of the meeting.

16. A terminal program causing a computer recording one or more IDs assigned to a user who uses the computer to execute processing of:
machine-recognizing a code assigned to a meeting;
transmitting an inquiry to a management server managing a meeting assigned to the machine-recognized code;
receiving a reply to the inquiry from the management server;
extracting an ID satisfying an ID condition specified in the received inquiry from among the one or more recorded IDs; and
transmitting a request specifying the extracted ID to the management server.

17. A non-transitory computer-readable information recording medium recording the program according to Claim 15 or 16.
